# EUROPÄISCHE PATENTSCHRIFT

(11) **EP 3 928 493 B1**
(45) Veröffentlichungstag und Bekanntmachung des Hinweises auf die Patenterteilung: **08.04.2026**
(21) Anmeldenummer: 20710807.7
(22) Anmeldetag: 28.02.2020
(51) Int. Cl.: H04L 67/12, H04L 69/18

(54) **DATENVERARBEITUNGSANORDNUNG UND DATENVERARBEITUNGSVERFAHREN**
DATA PROCESSING ARRANGEMENT AND DATA PROCESSING METHOD
SYSTÈME DE TRAITEMENT DE DONNÉES ET PROCÉDÉ DE TRAITEMENT DE DONNÉES

(30) Priorität: 28.03.2019 DE 102019204342
(43) Veröffentlichungstag der Anmeldung: 29.12.2021
(73) Patentinhaber: Siemens Energy Global GmbH & Co. KG, 81739 München (DE)
(72) Erfinder: KNUTH, Robert, 13587 Berlin (DE); GIERE, Stefan, 14612 Falkensee (DE); HEINECKE, Matthias, 14163 Berlin (DE); HILKER, Thomas, 14532 Stahnsdorf (DE); ZAEDOW, Benjamin, 13189 Berlin (DE)
(86) Internationale Anmeldenummer: PCT/EP2020/055232
(87) Internationale Veröffentlichungsnummer: WO 2020/193062

(56) Entgegenhaltungen:
- DE-A1- 102014 216 822
- US-A1- 2010 070 213
- ANONYMOUS MODBUS: "Modbus - Wikipedia", 11 February 2019 (2019-02-11), pages 1 - 12, XP093218102, Retrieved from the Internet <URL:https://en.wikipedia.org/w/index.php?title=Modbus&oldid=882849909> [retrieved on 20241025]
- MYRDA P T ET AL: "System-Wide Replacement Strategy for Substation Protection and Automation Systems", SYSTEM SCIENCES, 2006. HICSS '06. PROCEEDINGS OF THE 39TH ANNUAL HAWAI I INTERNATIONAL CONFERENCE ON KAUIA, HI, USA 04-07 JAN. 2006, PISCATAWAY, NJ, USA,IEEE, vol. 10, 4 January 2006 (2006-01-04), pages 246b - 246b, XP010882506, ISBN: 978-0-7695-2507-5
- CHEETHAM PETER ET AL: "Density monitoring of high-voltage SF6 circuit breakers", IEEE ELECTRICAL INSULATION MAGAZINE, IEEE SERVICE CENTER, NEW YORK, NY, US, vol. 31, no. 2, 1 March 2015 (2015-03-01), pages 6 - 13, XP011573800, ISSN: 0883-7554, [retrieved on 20150224], DOI: 10.1109/MEI.2015.7048132
- HOU ZHE ET AL: "Development of a Novel Comprehensive Online Monitor for MV Switchgears Based on Modbus", 2018 8TH INTERNATIONAL CONFERENCE ON POWER AND ENERGY SYSTEMS (ICPES), IEEE, 21 December 2018 (2018-12-21), pages 114 - 117, XP033514021, ISBN: 978-1-5386-6028-7, [retrieved on 20190125], DOI: 10.1109/ICPESYS.2018.8626894

## Beschreibung

Datenverarbeitungsanordnung und Datenverarbeitungsverfahren Die Erfindung betrifft eine Datenverarbeitungsanordnung gemäß Anspruch 1 sowie ein Datenverarbeitungsverfahren gemäß Anspruch 9.

Im Zuge der immer stärkeren Vernetzung von Geräten im Internet, dem sog. "Internet of Things", werden derzeit immer mehr Geräte direkt untereinander durch Maschine-zu-Maschine Schnittstellen verbunden, wie z. B. aus MYRDA PT ET AL: "System-Wide Replacement Strategy for Substation Protection and Automation Systems", SYSTEM SCIENCES, 2006. HICSS '06. PROCEEDINGS OF THE 39TH ANNUAL HAWAI I INTERNATIONAL CONFERENCE ON KAUIA, HI, USA 04-07 JAN. 2006, PISCATAWAY, NJ, USA, IEEE, Bd. 10, 4. Januar 2006, Seiten 246b-246b, XP010882506, ISBN: 978-0-7695-2507-5 bekannt ist. Im Bereich der Industrieautomatisierung werden beispielsweise unter dem Schlagwort "Industrie 4.0" Fertigungsstraßen als sog. "Cyber-Physical-Systems" simuliert, um in Echtzeit die Produktion von Waren überwachen und optimieren zu können.

Auch im Bereich der Energietechnik, wie z. B. aus der DE102014216822A1 bekannt ist, ist es erstrebenswert, vormals nicht fernüberwachbare Geräte wie z.B. Hochspannungstransformatoren über eine Datenkommunikation von außen überwachen zu können. Aus der Produktbroschüre "High-Voltage Products - Reliable products for all customer requirements", Siemens AG 2016, Article No. EMHP-B10010-00-7600, Dispo 30002 003000/78455 | 0516, sind eine Reihe von Hochspannungsgeräten wie Überspannungsableiter (Seite 36 ff.), Leistungsschalter und Gas-isolierte Schaltanlagen (Seite 84 ff.) bekannt. Diese Geräte sind teilweise bereits heute oder werden demnächst mit Sensoren zur Überwachung des jeweiligen Betriebszustands ausgerüstet.

Zur Übertragung und Bündelung der mittels der Sensoren erfassten Sensorsignale des jeweiligen Hochspannungsgerätes wird typischerweise ein Gerät verwendet, dass die Sensorsignale in eine Internetumgebung transferiert ("IoT Device"). Aus den Datenblättern "Sensformer^{™} Connectivity Device" und "Sensformer^{™} Connectivity Device, outdoor version" sind solche Geräte bekannt. Beide Modelle weisen eine begrenzte Anzahl von Eingängen bzw. Schnittstellen auf (z.B. drei Analoge und zwei Digitale Eingänge) sowie eine Reihe von Kommunikationsmöglichkeiten wie z.B. Ethernet, USB, oder Funk (GSM) auf. Die Kapazität der Geräte für die Datenerfassung ist entsprechend der begrenzten Anzahl der verfügbaren Eingänge begrenzt.

An die Erfindung stellt sich ausgehend von den bekannten "Senseformer Connectivity Devices" die Aufgabe, eine Datenverarbeitungsanordnung anzugeben, mit der vergleichsweise umfassend und effizient eine genaue Fernüberwachung von elektrischen Anlagen ermöglicht wird.

Die Erfindung löst diese Aufgabe durch eine Datenverarbeitungsanordnung gemäß Anspruch 1.

Eine elektrische Anlage im Sinne der Erfindung ist beispielsweise ein Trennschalter, ein Überspannungsableiter oder eine Gas-isolierte Schaltanlage. Auch andere gas- und luftisolierte Produkte wie z.B. Leistungsschalter, Messwandler, Trenn- und Erdungsschalter, etc. können zwecks Sicherstellung der Einhaltung der Betriebsbedingungen, der ordentlichen Verwendung und Planung (Steuerung) und allgemein zur Sammlung detaillierter Informationen bzgl. der Betriebsmittel, kontinuierlich überwacht werden.

Es kann sich bevorzugt um eine elektrische Anlage für Hochspannung, also Spannungen über 1 kV, handeln.

Es können jedoch erfindungsgemäß auch Produkte der Mittelspannung (unter 1 kV Nennspannung) überwacht werden. Eingangseinrichtungen können beispielsweise analoge Eingänge, digitale Eingänge und Kabelanschlüsse (z.B. ein Widerstandstemperatursensor "resistance temperature detector" wie etwa ein RTD-PT100 Kanal) aufweisen.

Sensormessdaten können alle Arten von Messwerten sein, die z.B. von Temperatur-, Druck-, Spannungs-, Stromstärke-, Magnetfeld-, elektrisches Feld-, Licht-, Infrarot-, Schall-, Vibrationssensoren, Lagesensoren oder Videokameras an elektrischen Anlagen erfasst werden. Sensormessdaten können auch eine Schaltstellung von Leistungsschaltern (geschlossen/geöffnet) und eine Gasdichte (Verriegelung aktiv/inaktiv) umfassen.

Die Rechnereinrichtung weist beispielsweise übliche Prozessormittel und/oder Datenspeichermittel auf, um die erfassten Sensormessdaten in digitaler Form zusammenzufassen und für die Übermittlung vorzubereiten.

Als Kommunikationseinrichtung kann eine Kommunikationseinrichtung für eine der folgenden Kommunikationsmittel vorgesehen werden: Ethernet, USB, Serial interface 1x RS485, Funk über eine Antenneneinrichtung, Mobilfunk per SIM Karte.

Modbus ist ein Datenübertragungsprotkoll aus dem Bereich der Industrieautomatisierung, das beispielsweise aus der Veröffentlichung "Modbus Grundlagen - Camilie Bauer AG", von Wikipedia (permanenter Link: https://de.wikipedia.org/w/index.php?title=Modbus&oldid=18525 0827) oder von der Website www.modbus.org bekannt ist. Es handelt sich um ein sog. Master-Slave System.

Es ist ein Vorteil der Anbindung von Modbus, dass eine vergleichsweise viel höhere Menge von Sensormessdaten als bisher in der Datenverarbeitungsanordnung erfasst werden können. Dies steigert die Genauigkeit der Überwachung von angeschlossenen Anlagen. Ferner werden die größeren Datenmengen zur Fernauswertung bereitgestellt, was die Genauigkeit der Überwachung einzelner elektrischer Anlagen und/oder eines gesamten Energienetzes verbessert. Dies erhöht die Zuverlässigkeit und Verfügbarkeit des Energienetzes, weil Probleme an elektrischen Anlagen besser erkannt werden können.

Ein weiterer Vorteil ist es, dass bereits zahlreiche Sensoren auf dem Markt erhältlich sind, die ihre Sensormessdaten direkt im Modbus-Format bereitstellen. Dies vereinfacht das Anschließen und Inbetriebnehmen der Datenverarbeitungsanordnung.

In der erfindungsgemäßen Datenverarbeitungsanordnung ist die mindestens eine Eingangseinrichtung ausgebildet, Sensormessdaten in wenigstens einem der folgenden Modbus-Protokolle zu erfassen: Modbus RTU, Modbus ASCII, Modbus TCP.

In einer bevorzugten Ausführungsform der erfindungsgemäßen Datenverarbeitungsanordnung ist die mindestens eine Eingangseinrichtung ausgebildet, Sensormessdaten per Funk zu empfangen. Es kann grundsätzlich jede Art einer drahtlosen Kommunikation eingesetzt werden, also z.B. W-Lan, GSM, 3G, 4G (LTE), 5G, NFC, long range radio, usw. Dies hat den Vorteil, dass die Sensoren auf Hochspanungs-Potential messen können und galvanisch getrennt installiert werden können. Die Sensormessdaten können direkt in die Datenverarbeitungsanordnung übermittelt werden. Eine Energieversorgung der Sensoren kann dabei beispielsweise durch sog. "energy-harvesting" aus umgebender elektromagnetischer Strahlung mittels einer Energiegewinnungseinrichtung der Sensoren erfolgen. Im Außenbereich kann auch eine Solarstromversorgung vorgesehen werden.

Ähnliche Vorteile können realisiert werden, wenn die Sensoren per Lichtkommunikation mit der Eingangseinrichtung verbunden werden. Dafür kann ein Laser oder ein Lichtwellenleiter dienen.

In einer bevorzugten Ausführungsform der erfindungsgemäßen Datenverarbeitungsanordnung ist die mindestens eine Kommunikationseinrichtung ausgebildet, die verarbeiteten Sensormessdaten an eine Server-Einrichtung zu übermitteln. Es kann grundsätzlich jede Art einer drahtlosen Kommunikation eingesetzt werden, also z.B. W-Lan, GSM, 3G, 4G (LTE), 5G, NFC, long range radio, usw. Dabei kann es sich z.B. um eine zentrale Server-Einrichtung wie beispielsweise ein Rechenzentrum oder eine Cloud-Application handeln. Eine Cloud-Application ist im Sinne der Erfindung als ein Computerprogramm zu verstehen, dass sich über ein Datennetzwerk wie dem Internet vernetzer Ressourcen (Prozessoren, Datenspeicher, usw.) bedient. Beispiele sind Microsoft Azure, Amazon Web Services oder Siemens Mindsphere. Es kann sich alternativ oder parallel bei der Server-Einrichtung auch um eine dezentrale Server-Einrichtung handeln; diese kann beispielsweise als in einer Substation lokal vorhandene Rechnereinrichtung verstanden werden.

In der erfindungsgemäßen Datenverarbeitungsanordnung ist die Rechnereinrichtung ausgebildet, die Sensormessdaten mit einer veränderbaren Abtastrate zu verarbeiten. Dies hat den Vorteil, dass z.B. für jeden unterschiedlichen Sensortyp die Abtastrate derart
anpassbar ist, dass jeweils relevante Vorgänge erfasst werden Können, wobei der Aliasing-Effekt Berücksichtigung findet. Bei akustischen Signalen kann beispielsweise eine vergleichsweise geringe Abtastrate von z.B. einigen hundert Hz genügen, um Fehler in der elektrischen Anlage feststellen zu können. Bei Spannungsmessdaten kann beispielsweise eine Abtastrate von einigen kHz vorgesehen werden.

Die jeweiligen Abtastraten für die unterschiedlichen Sensortypen können beispielsweise anhand von Testmessungen ermittelt werden, bei denen im Normalbetrieb vorkommende Messwerte von bei Fehlern auftretenden Messwerten unterschieden werden können.

In einer bevorzugten Ausführungsform der erfindungsgemäßen Datenverarbeitungsanordnung ist die Rechnereinrichtung ausgebildet, die Abtastrate für die jeweiligen Sensormessdaten automatisch von einer ersten Abtastrate auf eine zweite Abtastrate zu erhöhen, wenn die verarbeiteten Sensormessdaten auf einen Fehler in der elektrischen Anlage hinweisen. Ein solcher Hinweis kann beispielsweise vorliegen, wenn eine Abweichung von im Normalbetrieb typischerweise vorkommenden Sensormessdaten festgestellt wird. Dies hat den Vorteil, dass die Abtastrate nur dann besonders hoch ist, wenn Veränderungen des Zustandes erwartet werden. Nur dann wird mit hoher Abtastrate gearbeitet und entsprechend genauere Daten werden an eine Server-Einrichtung gesendet.

In einer weiteren bevorzugten Ausführungsform ist die Rechnereinrichtung ausgebildet, eine automatische Anpassung der Datenübertragungsrate an die Verbindungsgeschwindigkeit und/oder die Verbindungsart vorzunehmen. Beispielsweise kann bei einer stark gestörten Funkverbindung mit gedrosselter Datenübertragungsrate gesendet werden, während bei einer kabelgebundenen Ethernet-Verbindung mit hoher Datenübertragungsrate gesendet wird.

Die Rechnereinrichtung ist ausgebildet, nicht benötigte Kommunikationseinrichtungen abzuschalten, wenn die verarbeiteten Sensormessdaten auf einen Normalbetrieb in der elektrischen Anlage hinweisen. Hierdurch kann die Datenverarbeitungsanordnung temporär weitestgehend spannungslos geschaltet werden, um eine Verlängerung der Lebensdauer der Halbleiterbauelemente zu erreichen und Energie einzusparen. Wartungsaufwände werden hierdurch verringert, während die Verfügbarkeit erhöht wird.

In einer bevorzugten Ausführungsform der erfindungsgemäßen Datenverarbeitungsanordnung ist eine zusätzliche Kommunikationseinrichtung vorgesehen, die zur Datenkommunikation mit einer Netzleitstelle ausgebildet ist.

Beispielsweise kann einen Datenkommunikation nach der Norm IEC 61850 oder nach dem Modbus-Protokoll vorgesehen werden. Diese Ausführungsform hat den Vorteil, dass eine direkte Verbindung und Übermittlung der verarbeiteten Sensormessdaten an eine Netzleitstelle ermöglicht wird. Auf diese Weise kann ohne Umweg über die eingangs erwähnte Server-Einrichtung direkt z.B. in ein "Supervisory Control and Data Acquisition" (SCADA) System eingespeist werden. Dies erlaubt es, die verarbeiteten Sensormessdaten zur Steuerung des Netzbetriebs zu verwenden. Beispielsweise können anhand der verarbeiteten Sensormessdaten in der Leitstelle Fehler in elektrischen Anlagen erkannt werden, die sich auf den Netzbetrieb auswirken. Insbesondere kann anhand der Messdaten die Schwere von Störungen und damit die Ausfallwahrscheinlichkeit der elektrischen Anlagen abgeschätzt werden. Ohne die Sensormessdatenauswertung könnte die Leitstelle nur den Ausfall einer elektrischen Anlage erkennen, sobald er passiert. Eine langsame Verschlechterung usw. bliebe unerkannt.

Zusätzlich oder alternativ zur vorgenannten Ausführungsform kann auch zwischen der Server-Einrichtung und der Leitstelle ein Datenaustausch vorgesehen werden, um die Netzsteuerung in der Leitstelle zu verbessern.

In einer bevorzugten Ausführungsform der erfindungsgemäßen Datenverarbeitungsanordnung ist die mindestens eine Kommunikationseinrichtung ausgebildet, die verarbeiteten Sensormessdaten an eine weitere Datenverarbeitungsanordnung zu übermitteln. Entsprechend sind die beteiligten Datenverarbeitungsanordnungen ausgebildet, von jeweils anderen Datenverarbeitungsanordnungen Daten zu empfangen. Dieses Vorgehen ermöglicht es in Fällen, bei denen keine Verbindung zur Server-Einrichtung oder zur Netzleitstelle möglich ist (schwache Infrastruktur), Daten auch innerhalb der räumlichen Verteilung der elektrischen Anlagen weiterzugeben. Beispielsweise kann dies in einer Substation per W-LAN, WAN, Funk oder per Ethernet erfolgen.

Die Weitergabe der Sensormessdaten findet statt, bis eine Datenverarbeitungsanordnung erreicht ist, die eine Verbindung zur Server-Einrichtung und/oder zur Netzleitstelle herstellen kann. Hierdurch entsteht ein dynamischer Sendepfad. Mit dieser Methode lassen sich auch die effektiven Übergabepunkte in die Datenwolke reduzieren. Man kann also auch gezielt Datenverarbeitungsanordnungen verbauen, die geplant keine Verbindung zur Server-Einrichtung und/oder zur Netzleitstelle aufbauen können. In einem solchen Fall können alle Datenverarbeitungsanordnungen einen gemeinsamen Router verwenden, um Kontakt nach außen herzustellen.

Im Extremfall sind die Verbindungspunkte derart limitiert, dass ein Mesh-Netzwerk aufgebaut werden muss. So können auch größeren Distanzen überwunden werden, bevor eine Verbindung zur Server-Einrichtung und/oder zur Netzleitstelle hergestellt werden kann.

In einer bevorzugten Ausführungsform der erfindungsgemäßen Datenverarbeitungsanordnung ist ein gesicherter Datenspeicher vorgesehen, der geeignet ist, nach Art eines Flugschreibers Sensormessdaten abzuspeichern. Hierfür ist der entsprechende Speicherbereich für die Dauer der Datenspeicherung nur-lesbar ("read-only") ausgebildet. Vorteilhaft ist es ferner, wenn nur Sensormessdaten abgespeichert werden, bei denen ein Hinweis auf einen fehlerhaften Betrieb einer elektrischen Anlage vorliegt, wobei sich ein solcher Hinweis beispielsweise aus Abweichungen von im Normalbetrieb typischen Sensormessdaten ergibt.

In einer bevorzugten Ausführungsform der erfindungsgemäßen Datenverarbeitungsanordnung ist eine Zeitstempeleinrichtung vorgesehen, die ausgebildet ist, den Sensormessdaten jeweils einen Zeitstempel zuzuordnen. Der Zeitstempel gibt dabei jeweils den Zeitpunkt an, an dem die jeweiligen Messwerte bzw. Sensormessdaten in der Datenverarbeitungsanordnung eingegangen sind. Bevorzugt kann eine einzige Zeitstempeleinrichtung vorgesehen werden, um alle Sensormessdaten, die an den verschiedenen Eingangseinrichtungen eingehen, mit Zeitstempeln zu versehen. Alternativ können mehrere Zeitstempeleinrichtungen vorgesehen werden, also z.B. eine Zeitstempeleinrichtung für jede Eingangseinrichtung. Die Zeitstempel können dabei beispielsweise ms-genau erfasst werden. Auch eine Erfassung im hundertstel-Sekunden oder im zehntel-Sekundenbereich kann durchgeführt werden.

Besonders bevorzugt ist es, wenn die Zeitstempeleinrichtung mit einem externen Zeitgeber synchronisiert ist.

Beispielsweise kann dies durch den Empfang von Satellitenzeitdaten, z.B. über eine Empfangseinrichtung für das Global Positioning System (GPS) erreicht werden, welche beispielsweise wiederrum mit einer Atomuhr synchronisiert sind. Auf diese Weise ergibt sich der Vorteil, dass alle Sensormessdaten mit der gleichen Zeit erfasst werden, unabhängig davon, wo sich die Datenverarbeitungsanordnung jeweils befindet. Ferner können Messdaten von verschiedenen Datenverarbeitungsanordnungen in eine zeitliche Reihenfolge gebracht werden, was genauere Berechnungen z.B. einer Netzstabilität in einer Leitstelle ermöglicht.

Dadurch, dass die Sensormessdaten erfindungsgemäß i.d.R. nicht lokal in einem fest verdrahteten System ausgewertet werden, sondern entfernt und zentral in einer Server-Einrichtung, kann es insbesondere bei Nutzung von Funkverbindungen und/oder Internetverbindungen zu verlangsamten Datentransport oder einer Unterbrechung der jeweiligen Verbindung kommen. Szenarien für eine Unterbrechung der Verbindung sind bspw. ein Stromausfall im Nieder- und/oder Mittelspannungsnetz und damit Ausfall einer GSM-Verbindung und/oder Ausfall einer LAN-Verbindung. Alternativ besteht beim Internet Service Provider ein Systemfehler und die Internet-Verbindung ist seitens des Dienstleisters gestört.

In einem solchen Fall ist nach Widerherstellung der Verbindung problemlos möglich, die Sensormessdaten anhand ihrer Zeitstempel gegenüber neueren Sensormessdaten in eine zeitliche Reihenfolge zu bringen und auf Seiten der Server-Einrichtung vorgesehene Auswertungen wieder aufzunehmen.

Zu den Sensormessdaten, bei denen eine Datenaktualität und damit der Einsatz der Zeitstempel wichtig ist, zählen u.a.:
- Mechanische Lebensdauer des Betriebsmittels (bspw. Leistungsschalter),
- getätigte Anzahl Schaltoperationen und/oder Schaltspiele,
- verbleibende Anzahl Schaltoperationen und/oder Schaltspiele bis zur nächsten planmäßigen Wartung,
- Schaltstellung des Leistungsschalters (geschlossen/geöffnet),
- Information zur Einschaltbereitschaft des Leistungsschalters (Einschaltfeder gespannt, Schalter in Position "offen", Verriegelung inaktiv),
- Wert der Gasdichte (kg/m³) und des Gasdruckes bezogen auf eine Temperatur von 20°C,
- Die Unterschreitung eines Grenzwertes (Trigger einer Verlustmeldung "Warning" oder "Alarm"),
- Die Information zur absoluten Verlustmenge an Isoliergas pro Betriebsmittel/Gasraum,
- Die Information, dass keine Auffälligkeiten bestehen (Status "OK") erfordert ebenfalls einen Zeitstempel, um das Risiko falsch definierter Maßnahmen und/oder Entscheidungen zu reduzieren,
- Umgebungstemperatur (Rückschluss auf die Einhaltung der Spezifikation)
- Temperatur im Leistungsschalter-Antriebsschrank (Hinweis auf Funktionalität der Anti-Kondensations-Heizung sowie ggf. einer zusätzlichen Heizung bei Anwendung des Assets für Niedertemperatur, bis -60°C).

In einer bevorzugten Ausführungsform der erfindungsgemäßen Datenverarbeitungsanordnung ist eine Server-Einrichtung vorgesehen, die zum Empfang der verarbeiteten Sensormessdaten ausgebildet ist. Es kann sich wie eingangs erläutert z.B. um eine Netzwerkapplikation eines Cloudsystems handeln.

Die Server-Einrichtung kann die Sensormessdaten einer Vielzahl von Datenverarbeitungsanordnungen zentral zusammenführen und damit eine flottenübergreifende Überwachung des Betriebszustands der elektrischen Anlagen bereitstellen. Auf Seiten der Server-Einrichtung kann eine App mit einer Bedienoberfläche vorgesehen sein, die in einem sog. Dashboard neben den aus den Sensormessdaten gewonnenen Informationen auch den jeweiligen Zeitpunkt der Datenerfassung anzeigt. Es ist ferner z.B. eine allgemeine Übersicht zu allen elektrischen Anlagen eines Netzes und/oder Kunden vorgesehen, die neben einer Beschreibung von ggf. entdeckten Auffälligkeit(en) auch den aktuellen Live-Status (Online/Offline) der jeweiligen Datenverarbeitungsanordnungen dargestellt.

In einer weiteren bevorzugten Ausführungsform der erfindungsgemäßen Datenverarbeitungsanordnung ist ein Mobilgerät vorgesehen, das zur Datenkommunikation mit der Server-Einrichtung ausgebildet ist. Es kann sich beispielsweise um ein Tablet, ein Handy oder einen Laptop handeln, wobei z.B. ein LTE-Netz zur Datenkommunikation verwendet wird. Das Mobilgerät ist zur Darstellung von Informationen über einen Betriebszustand der elektrischen Anlagen ausgebildet. Eingesetzt werden kann beispielsweise einen Touchscreen.

Dieser Ansatz stellt einen entscheidenden Vorteil im Vergleich zu den klassischen Systemen der Leittechnik dar. Elektrische Anlagen lassen sich dadurch bequem, unkompliziert und ortsungebunden überwachen. Es können ferner leicht Vergleiche zwischen zwei oder mehr elektrischen Anlagen durchgeführt werden, um Abweichungen von zulässigen Betriebsparametern zu erkennen. Kontroll- und Wartungspersonal hat direkt vor Ort bspw. innerhalb eines Umspannwerkes die Möglichkeit, z.B. mittels Tablets oder Notebooks den gesamten Anlagenzustand zu überwachen. Es kann unmittelbar vor einer Aktivität, wie bspw. einer Reparaturmaßnahme, noch einmal den Anlagenzustand überprüfen.

In einer bevorzugten Ausführungsform der erfindungsgemäßen Datenverarbeitungsanordnung ist eine Datenzwischenspeichervorrichtung vorgesehen, die ausgebildet ist, die verarbeiteten Sensormessdaten vor einer Übertragung mittels der Kommunikationseinrichtung zwischen zu speichern. Es kann beispielsweise eine HDD oder ein RAM Speicher verwendet werden. Diese Ausführungsform hat den Vorteil, dass im Falle einer Unterbrechung der Verbindung zwischen der Datenspeichereinrichtung und einer entfernten Server-Einrichtung die erhobenen Rohdaten zwischengespeichert und später, nach Wiederherstellung einer Verbindung, gesendet werden können.

Ferner stellt sich die Erfindung ausgehend von den bekannten "Senseformer Connectivity Devices" die Aufgabe, ein Datenverarbeitungsverfahren anzugeben, mit dem vergleichsweise umfassend und effizient eine genaue Fernüberwachung von elektrischen Anlagen möglich ist.

Die Erfindung löst diese Aufgabe durch ein Datenverarbeitungsverfahren gemäß Anspruch 9. Bevorzugte Ausführungsformen sind in den Ansprüchen 10 bis 13 angegeben.

Es ergeben sich sinngemäß die gleichen Vorteile wie eingangs für die erfindungsgemäße Datenverarbeitungsanordnung angegeben. Dem Fachmann ist dabei klar, dass sämtliche im Zusammenhang mit der Datenverarbeitungsanordnung beschriebene Ausgestaltungen der Erfindung auch im Verfahren Anwendung finden können.

Zur besseren Erläuterung der Erfindung zeigen in schematischer Darstellung die
- Figur 1: ein erstes Ausführungsbeispiel der Erfindung, und
- Figur 2: eine erste Ansicht einer Benutzeroberfläche, die einen Betriebszustand elektrischer Anlagen anzeigt, und
- Figur 3: eine zweite Ansicht der Benutzeroberfläche gemäß Figur 2.

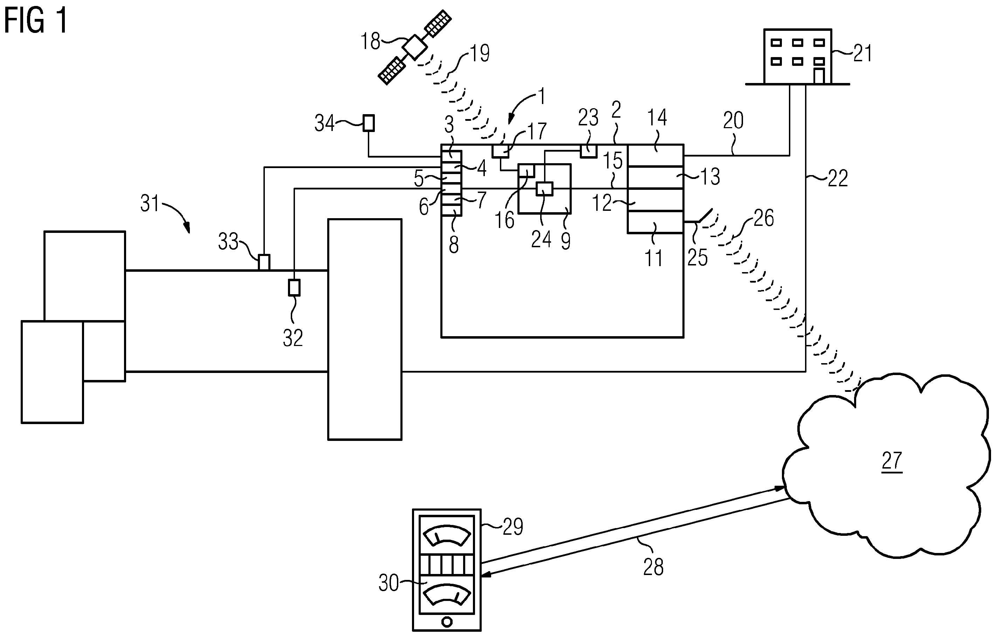

Figur 1 zeigt ein erstes Ausführungsbeispiel der Erfindung. Als Beispiel für eine zu überwachende elektrische Anlage ist eine gasisolierte Hochspannungsschaltanlage 31 schematisch gezeigt. Diese weist einen internen Drucksensor 32, einen Oberflächentemperatursensor 33 und einen Umgebungstemperatursensor 34 auf. Die Sensoren 32, 33, 34 sind jeweils mit Kommunikationsverbindungen mit einer erfindungsgemäßen Datenverarbeitungsanordnung 1 verbunden. Die Datenverarbeitungsanordnung 1 weist mehrere Eingangseinrichtungen 3, 4, 5, 6, 7, 8 für die Erfassung von Sensormessdaten der Sensoren 32, 33, 34 auf. Dabei speist der Sensor 32 seine Sensormessdaten in die Empfangseinrichtung 6 ein, die zum Beispiel für einen Datenempfang nach dem Protokoll Modbus RTU ausgerüstet ist. Der Sensor 33 übermittelt seine Daten an die Eingangseinrichtung 4, die bspw. für einen Anschluss von Ethernet-Kabeln ausgebildet ist. Der Sensor 34 übermittelt seine Sensormessdaten an die Eingangseinrichtung 3, welche bspw. über USB angebunden ist. Die empfangenen Sensormessdaten werden innerhalb der Datenverarbeitungsanordnung von den Eingangseinrichtungen 3, 4, 5, 6, 7, 8 an eine Rechnereinrichtung 9 übertragen.

In der Rechnereinrichtung 9 findet eine Verarbeitung der eingehenden Sensormessdaten statt. Diese werden z.B. mit einer einheitlichen Abtastrate, zum Beispiel von 10 ms, in digitale Datentelegramme oder Ähnliches umgewandelt. Dabei können die Sensormessdaten insbesondere zusammengefasst und als so verarbeitete Sensormessdaten über eine Datenkommunikationsverbindung 15 mit Kommunikationseinrichtungen 11, 12, 13, 14 übermittelt werden. Bei der Verarbeitung der Sensormessdaten innerhalb der Rechnereinrichtung 9 werden den gemessenen Werten auch Zeitstempel hinzugefügt. Die zum Beispiel ms-genauen Zeitstempel werden von einer Zeitstempeleinrichtung 16 bereitgestellt, welche über eine Synchronisationsvorrichtung 17 über Global Positioning System Signale 19 und einen GPS-Satelliten 18 zeitsynchronisiert ist.

Die mit Zeitstempeln versehenen verarbeiteten Sensormessdaten können in einem gesicherten Datenspeicher 23 nach Art eines Flugschreibers unveränderbar abgespeichert werden. Auf diese Weise können Fehler und ähnliches später stets anhand der im gesicherten Datenspeicher 23 vorliegenden Informationen rekonstruiert werden, selbst wenn die Datenverarbeitungsanordnung oder ein extern liegender Speicher für die Sensormessdaten beschädigt und nicht auslesbar sind. Die Kommunikationseinrichtung 11 ist mit einer Antenne 25 versehen, um per Funk - zum Beispiel per LTE - die verarbeiteten und mit einem Zeitstempel versehenen Sensormessdaten an eine als Wolke dargestellte Server-Einrichtung bzw. Cloud-Applikation 27 zu übermitteln.

In der Server-Einrichtung 27 findet eine Verarbeitung der Sensormessdaten zu Aussagen über den Betriebszustand der elektrischen Anlage 31 statt. Die Server-Einrichtung 27 ist ausgebildet, verarbeitete Sensormessdaten einer Vielzahl von Datenverarbeitungsanordnungen 1 zu empfangen und zu verarbeiten. Bspw. kann aus den Sensormessdaten ein Betriebszustand der überwachten elektrischen Anlage 31 abgeleitet werden. Für eine Vielzahl von elektrischen Anlagen, die mittels Datenverarbeitungsanordnungen überwacht werden, kann im Sinne eines Flottenmanagements auch ein flottenübergreifender Wartungsbedarf und/oder ein sogenannter "Health Index" berechnet werden. Die Informationen zum Betriebszustand der überwachten elektrischen Anlage und/oder den genannten Parametern in Bezug auf das Flottenmanagement wird mittels einer bidirektionalen Datenkommunikation 28 an ein Mobilgerät 29, in diesem Fall ein Tablet, übertragen. Auf einer Anzeigeeinrichtung 30 des Tablets 29 sind die Betriebszustandsinformationen usw. der elektrischen Anlage 31 angedeutet. Der Einsatz des Mobilgerätes 29 hat den Vorteil, dass Techniker von überall und jederzeit Zugriff auf die Betriebszustandsinformationen der elektrische Anlage 31 haben und dieses bspw. bei einer Begehung einer Substation oder ähnlichem direkt überprüfen können.

Ferner ist die Kommunikationseinrichtung 14 ausgebildet, über eine Datenkommunikationsleitung 20, zum Beispiel einer Powerline-Kommunikation über eine Hochspannungsleitung (PLC), mit einer Netzleitstelle 21 zu kommunizieren. Die Netzleitstelle 21 kann basierend auf den verarbeiteten Sensormessdaten über eine Steuerleitung 22 direkt auf die elektrische Anlage 31 rückwirken und diese bspw. mit Steuerbefehlen versorgen.

Bevorzugt ist es, wenn die Abtastrate für die Sensormessdaten innerhalb der Rechnereinrichtung 9 an die jeweils auf Seiten der Kommunikationseinrichtung mögliche Bandbreite zur Datenübertragung nach Extern angepasst wird. Ist bspw. nur eine sehr gestörte Funkverbindung 26 zur Server-Einrichtung 27 möglich, so kann aufgrund der geringen Datenübertragungsraten die Abtastrate innerhalb der Rechnereinrichtung entsprechend abgesenkt werden. Sollte die Kommunikationsverbindung entweder zur Server-Einrichtung 27 und/oder zur Leitstelle 21 komplett unterbrochen sein, so kann innerhalb der Rechnereinrichtung 9 in einer Zwischenspeichereinrichtung 24 eine Zwischenabspeicherung der eingehenden verarbeiteten Sensormessdaten erfolgen, bis die Kommunikationsverbindungen 20, 26 wiederhergestellt sind.

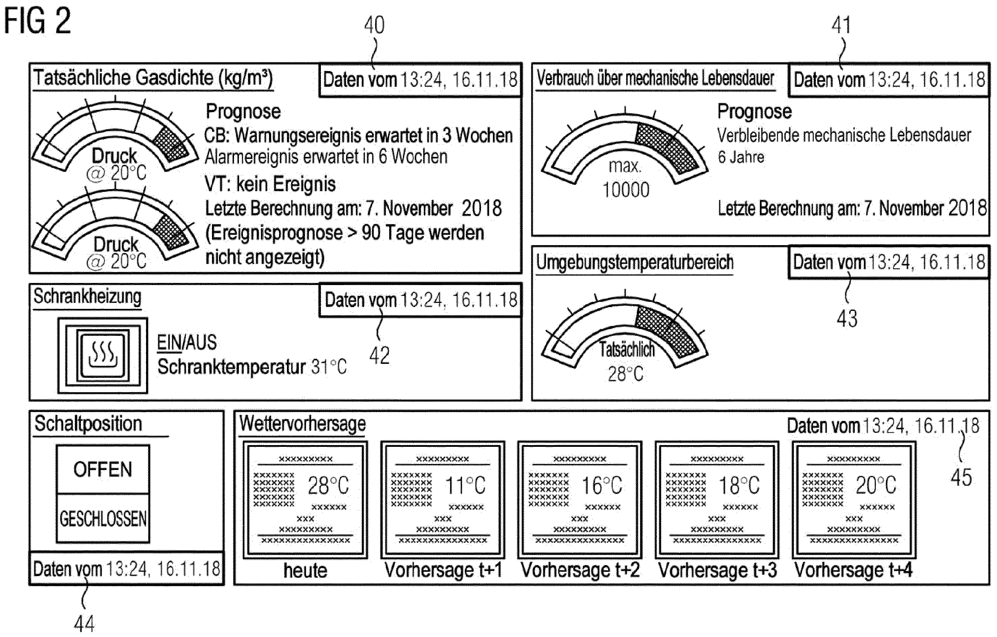

Die Figur 2 zeigt eine erste Ansicht einer Benutzeroberfläche, die einen Betriebszustand elektrischer Anlagen anzeigt. Bspw. kann es sich um eine Anzeige handeln, die in dem Mobilgerät 29 für einen Benutzer angezeigt wird. Dabei werden für die elektrische Anlage 31 bspw. die Gasdichte angezeigt, versehen mit einem Zeitstempel 40, der auf die Aktualität der angezeigten Informationen rückschließen lässt. Ferner ist eine Lebensdauerprognose für die mechanischen Komponenten angezeigt und mit einem Zeitstempel 41 versehen. Auch eine Gehäuse- oder Schranktemperatur ist dargestellt und mit einem Zeitstempel 42 versehen. Die Umgebungstemperatur ist mit einem Zeitstempel 43 versehen. Ferner wird die Schaltposition der Anlage als offen angezeigt, was wiederum mit einem Zeitstempel 44 versehen ist. Für den Benutzer der App bzw. Bedienoberfläche ist ferner eine Wettervorhersage mit Zeitstempel 45 vorgesehen.

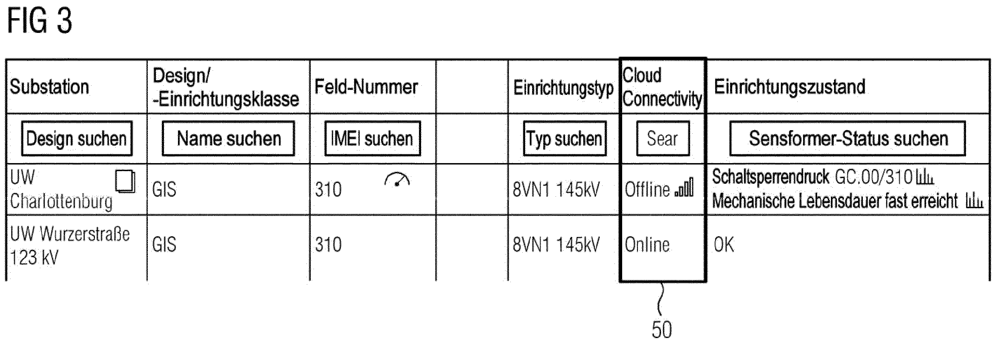

Figur 3 zeigt eine zweite Ansicht der Benutzeroberfläche gemäß Figur 2, bei der in einer Substation (Umspannwerk, abgekürzt UW) verschiedene gasisolierte Schaltanlagen in einer Übersichtsansicht zusammengefasst sind. Die obere Zeile "UW Charlottenburg" wird als offline, also nicht mit der Server-Einrichtung verbunden, dargestellt. Unter "Equipment Status" bzw. "Betriebszustand" sind Fehlermeldungen angezeigt, die dem Benutzer Rückschlüsse auf den Grund der unterbrochenen Überwachung erlauben. Dagegen ist für die zweite Zeile "UW Wurzerstrasse 123 KV" [?] der Verbindungszustand online angezeigt, und der Equipment Status wird als OK angegeben. Dabei bezieht sich die Spalte "Cloud Connectivity" auf den Zustand der Kommunikationsverbindung 26 zwischen der Datenverarbeitungsanordnung 1 und der Server-Einrichtung 27 gemäß Figur 1.

## Patentansprüche

1. Datenverarbeitungsanordnung (1), aufweisend
- mehrere Eingangseinrichtungen (3,4,5,6,7,8) für die Erfassung von Sensormessdaten einer oder mehrerer elektrischer Anlagen (31),
- eine Rechnereinrichtung (9) für eine Verarbeitung der Sensormessdaten,
- mindestens eine Kommunikationseinrichtung (11,12,13) zur Übermittlung der verarbeiteten Sensormessdaten,
wobei mindestens eine der mehreren Eingangseinrichtungen (6) für die Erfassung von Modbus-Signalen ausgebildet ist, wobei
die Rechnereinrichtung (9) ausgebildet ist, die Sensormessdaten mit einer veränderbaren Abtastrate zu verarbeiten, und
mindestens eine der mehreren Eingangseinrichtungen (3,4,5,6,7,8) ausgebildet ist, Sensormessdaten in wenigstens einem der folgenden Modbus-Protokollen zu erfassen: Modbus RTU und/oder Modbus ASCII,
wobei die Rechnereinrichtung (9) ausgebildet ist, nicht benötigte Kommunikationseinrichtungen (12, 13) aus der Gruppe der mindestens einen Kommunikationseinrichtung (11, 12, 13) abzuschalten, wenn die verarbeiteten Sensormessdaten auf einen Normalbetrieb in der entsprechenden elektrischen Anlage (31) hinweisen.

2. Datenverarbeitungsanordnung (1) gemäß Anspruch 1,
**dadurch gekennzeichnet, dass** mindestens eine der mehreren Eingangseinrichtungen (3,4,5,7,8) ausgebildet ist, Sensormessdaten per Funk zu empfangen.

3. Datenverarbeitungsanordnung (1) gemäß einem der vorhergehenden Ansprüche,
**dadurch gekennzeichnet, dass**
die mindestens eine Kommunikationseinrichtung (11) ausgebildet ist, die verarbeiteten Sensormessdaten an eine Server-Einrichtung (27) zu übermitteln.

4. Datenverarbeitungsanordnung (1) gemäß einem der vorhergehenden Ansprüche,
**dadurch gekennzeichnet, dass**
die Rechnereinrichtung (9) ausgebildet ist, die Abtastrate für die jeweiligen Sensormessdaten automatisch von einer ersten Abtastrate auf eine zweite Abtastrate zu erhöhen, wenn die verarbeiteten Sensormessdaten auf einen Fehler in der elektrischen Anlage (31) hinweisen.

5. Datenverarbeitungsanordnung (1) gemäß einem der vorhergehenden Ansprüche,
**dadurch gekennzeichnet, dass**
eine zusätzliche Kommunikationseinrichtung (14) umfasst ist, die zur Datenkommunikation (20) mit einer Netzleitstelle (21) ausgebildet ist.

6. Datenverarbeitungsanordnung (1) gemäß einem der vorhergehenden Ansprüche,
**dadurch gekennzeichnet, dass**
die mindestens eine Kommunikationseinrichtung (12) ausgebildet ist, die verarbeiteten Sensormessdaten an eine weitere Datenverarbeitungsanordnung zu übermitteln.

7. Datenverarbeitungsanordnung (1) gemäß einem der vorhergehenden Ansprüche,
**dadurch gekennzeichnet, dass**
ein gesicherter Datenspeicher (23) umfasst ist, der ausgebildet ist, nach Art eines Flugschreibers Sensormessdaten abzuspeichern.

8. Datenverarbeitungsanordnung (1) gemäß einem der vorhergehenden Ansprüche,
**dadurch gekennzeichnet, dass**
eine Zeitstempeleinrichtung (16) umfasst ist, die ausgebildet ist, den Sensormessdaten jeweils einen Zeitstempel zuzuordnen.

9. Datenverarbeitungsverfahren, bei dem mittels mehrerer Eingangseinrichtungen (3,4,5,6,7,8) Sensormessdaten einer oder mehrerer elektrischer Anlagen (31) erfasst werden, und
mittels einer Rechnereinrichtung (9) eine Verarbeitung der Sensormessdaten durchgeführt wird, und
mittels mindestens einer Kommunikationseinrichtung (11,12,13) die verarbeiteten Sensormessdaten übermittelt werden, wobei mittels mindestens einer der mehreren Eingangseinrichtungen (6) Modbus-Signale erfasst werden,
wobei eine der mehreren Eingangseinrichtungen (3,4,5,6,7,8) Sensormessdaten in wenigstens einem der folgenden Modbus-Protokolle erfasst: Modbus RTU und/oder Modbus ASCII, und mittels der Rechnereinrichtung (9) die Sensormessdaten mit einer veränderbaren Abtastrate verarbeitet werden, wobei die Rechnereinrichtung (9) ausgebildet ist, nicht benötigte Kommunikationseinrichtungen (12, 13) aus der Gruppe der mindestens einen Kommunikationseinrichtung (11, 12, 13) abzuschalten, wenn die verarbeiteten Sensormessdaten auf einen Normalbetrieb in der entsprechenden elektrischen Anlage (31) hinweisen.

10. Datenverarbeitungsverfahren gemäß Anspruch 9,
**dadurch gekennzeichnet, dass**
mittels einer Eingangseinrichtung (3,4,5,7,8) Sensormessdaten per Funk empfangen werden.

11. Datenverarbeitungsverfahren gemäß einem der Ansprüche 9 bis 10,
**dadurch gekennzeichnet, dass**
mittels einer zusätzlichen Kommunikationseinrichtung (14) eine Datenkommunikation (20) mit einer Netzleitstelle (21) stattfindet.

12. Datenverarbeitungsverfahren gemäß einem der Ansprüche 9 bis 11,
**dadurch gekennzeichnet, dass**
mittels mindestens einer der Kommunikationseinrichtungen (12) die verarbeiteten Sensormessdaten an eine weitere Datenverarbeitungsanordnung übermittelt werden.

13. Datenverarbeitungsverfahren gemäß einem der Ansprüche 9 bis 12,
**dadurch gekennzeichnet, dass**
eine Zeitstempeleinrichtung (16) den Sensormessdaten jeweils einen Zeitstempel zuordnet.

## Claims

1. A data processing arrangement (1), having
- a plurality of input devices (3, 4, 5, 6, 7, 8) for detecting sensor measurement data of one or more electrical systems (31),
- a computer device (9) for processing the sensor measurement data,
- at least one communication device (11, 12, 13) for transmitting the processed sensor measurement data, wherein at least one of the plurality of input devices (6) is configured for detecting Modbus signals,
wherein the computer device (9) is configured to process the sensor measurement data at a variable sampling rate, and at least one of the plurality of input devices (3, 4, 5, 6, 7, 8) is configured to detect sensor measurement data in at least one of the following Modbus protocols: Modbus RTU and/or Modbus ASCII, wherein the computer device (9) is configured to switch off non-required communication devices (12, 13) from the group of the at least one communication device (11, 12, 13) when the processed sensor measurement data is indicative of normal operation in the corresponding electrical system (31).

2. The data processing arrangement (1) according to claim 1, **characterised in that**
at least one of the plurality of input devices (3, 4, 5, 7, 8) is configured to receive sensor measurement data by radio.

3. The data processing arrangement (1) according to any of the preceding claims,
**characterised in that**
the at least one communication device (11) is configured to transmit the processed sensor measurement data to a server device (27) .

4. The data processing arrangement (1) according to any of the preceding claims,
**characterised in that**
the computer device (9) is configured to increase the sampling rate for the respective sensor measurement data automatically from a first sampling rate to a second sampling rate when the processed sensor measurement data is indicative of an error in the electrical system (31).

5. The data processing arrangement (1) according to any of the preceding claims,
**characterised in that**
an additional communication device (14) is comprised which is configured for data communication (20) with a network control centre (21).

6. The data processing arrangement (1) according to any of the preceding claims,
**characterised in that**
the at least one communication device (12) is configured to transmit the processed sensor measurement data to a further data processing arrangement.

7. The data processing arrangement (1) according to any of the preceding claims,
**characterised in that**
a secured data memory (23) is comprised which is configured to store sensor measurement data in the manner of a flight recorder.

8. The data processing arrangement (1) according to any of the preceding claims,
**characterised in that**
a time stamp device (16) is comprised which is configured to assign a time stamp to each of the sensor measurement data.

9. A data processing method, in which
sensor measurement data of one or more electrical systems (31) is detected through a plurality of input devices (3, 4, 5, 6, 7, 8), and
processing of the sensor measurement data is performed through a computer device (9), and
the processed sensor measurement data is transmitted through at least one communication device (11, 12, 13), wherein Modbus signals are detected through at least one of the plurality of input devices (6),
wherein
one of the plurality of input devices (3, 4, 5, 6, 7, 8) detects sensor measurement data in at least one of the following Modbus protocols: Modbus RTU and/or Modbus ASCII, and the sensor measurement data are processed through the computer device (9) at a variable sampling rate, wherein the computer device (9) is configured to switch off non-required communication devices (12, 13) from the group of the at least one communication device (11, 12, 13) when the processed sensor measurement data is indicative of normal operation in the corresponding electrical system (31).

10. The data processing method according to claim 9,
**characterised in that**
sensor measurement data are received by radio through an input device (3, 4, 5, 6, 7, 8).

11. The data processing method according to any of claims 9 to 10,
**characterised in that**
data communication (20) with a network control centre (21) takes place through an additional communication device (14).

12. The data processing method according to any of claims 9 to 11,
**characterised in that**
the processed sensor measurement data is transmitted to a further data processing arrangement through at least one of the communication devices (12).

13. The data processing method according to any of claims 9 to 12,
**characterised in that**
a time stamp device (16) assigns a time stamp to each of the sensor measurement data.

## Revendications

1. Agencement de traitement de données (1), comprenant
- une pluralité de dispositifs d'entrée (3, 4, 5, 6, 7, 8) pour l'acquisition de données de mesure de capteurs d'une ou plusieurs installations électriques (31),
- un dispositif informatique (9) pour un traitement des données de mesure de capteurs,
- au moins un dispositif de communication (11, 12, 13) pour la transmission des données de mesure de capteurs traitées, dans lequel au moins l'un de la pluralité de dispositifs d'entrée (6) est configuré pour l'acquisition de signaux Modbus,
dans lequel
le dispositif informatique (9) est configuré pour traiter les données de mesure de capteurs avec un taux d'échantillonnage variable, et
au moins l'un de la pluralité de dispositifs d'entrée (3, 4, 5, 6, 7, 8) est configuré pour acquérir des données de mesure de capteur dans au moins l'un des protocoles Modbus suivants : Modbus RTU et/ou Modbus ASCII
dans lequel le dispositif informatique (9) est configuré pour désactiver des dispositifs de communication (12, 13) non requis parmi le groupe dudit au moins un dispositif de communication (11, 12, 13) lorsque les données de mesure de capteurs traitées indiquent un fonctionnement normal dans l'installation électrique (31) correspondante.

2. Agencement de traitement de données (1) selon la revendication 1,
**caractérisé en ce que**
au moins l'un de la pluralité de dispositifs d'entrée (3, 4, 5, 7, 8) est configuré pour recevoir des données de mesure de capteurs par radio,

3. Agencement de traitement de données (1) selon l'une quelconque des revendications précédentes,
**caractérisé en ce que**
ledit au moins un dispositif de communication (11) est configuré pour transmettre les données de mesure de capteurs traitées à un dispositif serveur (27).

4. Agencement de traitement de données (1) selon l'une quelconque des revendications précédentes,
**caractérisé en ce que**
le dispositif informatique (9) est configuré pour augmenter automatiquement le taux d'échantillonnage pour les données de mesure de capteurs respectives d'un premier taux d'échantillonnage à un second taux d'échantillonnage lorsque les données de mesure de capteurs traitées indiquent un défaut dans l'installation électrique (31).

5. Agencement de traitement de données (1) selon l'une quelconque des revendications précédentes,
**caractérisé en ce que**
un dispositif de communication supplémentaire (14) est inclus, lequel est configuré pour une communication de données (20) avec un centre de conduite de réseau (21).

6. Agencement de traitement de données (1) selon l'une des revendications précédentes,
**caractérisé en ce que**
ledit au moins un dispositif de communication (12) est configuré pour transmettre les données de mesure de capteurs traitées à un autre agencement de traitement de données.

7. Agencement de traitement de données (1) selon l'une des revendications précédentes,
**caractérisé en ce que**
une mémoire de données sécurisée (23) est incluse, laquelle est configurée pour mémoriser des données de mesure de capteurs à la manière d'une boîte noire.

8. Agencement de traitement de données (1) selon l'une des revendications précédentes,
**caractérisé en ce que**
un dispositif d'horodatage (16) est inclus, lequel est configuré pour affecter respectivement un horodatage à chaque donnée de mesure de capteurs.

9. Procédé de traitement de données, dans lequel
des données de mesure de capteurs d'une ou plusieurs installations électriques (31) sont acquises au moyen d'une pluralité de dispositifs d'entrée (3, 4, 5, 6, 7, 8), et
un traitement des données de mesure de capteurs est effectué au moyen d'un dispositif informatique (9), et
les données de mesure de capteurs traitées sont transmises au moyen d'au moins un dispositif de communication (11, 12, 13), dans lequel des signaux Modbus sont acquis au moyen d'au moins l'un de la pluralité de dispositifs d'entrée (6),
dans lequel
l'un de la pluralité de dispositifs d'entrée (3, 4, 5, 6, 7, 8) acquiert des données de mesure de capteurs dans au moins l'un des protocoles Modbus suivants : Modbus RTU et/ou Modbus ASCII, et les données de mesure de capteurs sont traitées avec un taux d'échantillonnage variable au moyen du dispositif informatique (9), dans lequel le dispositif informatique (9) est configuré pour désactiver des dispositifs de communication (12, 13) non requis parmi le groupe dudit au moins un dispositif de communication (11, 12, 13) lorsque les données de mesure de capteurs traitées indiquent un fonctionnement normal dans l'installation électrique (31) correspondante.

10. Procédé de traitement de données selon la revendication 9, **caractérisé en ce que**
des données de mesure de capteurs sont reçues par radio au moyen d'un dispositif d'entrée (3, 4, 5, 7, 8).

11. Procédé de traitement de données selon l'une quelconque des revendications 9 à 10,
**caractérisé en ce que**
une communication de données (20) avec un centre de conduite de réseau (21) a lieu au moyen d'un dispositif de communication supplémentaire (14).

12. Procédé de traitement de données selon l'une quelconque des revendications 9 à 11,
**caractérisé en ce que**
les données de mesure de capteurs traitées sont transmises à un autre agencement de traitement de données au moyen d'au moins l'un des dispositifs de communication (12).

13. Procédé de traitement de données selon l'une quelconque des revendications 9 à 12,
**caractérisé en ce que**
un dispositif d'horodatage (16) affecte respectivement un horodatage à chaque donnée de mesure de capteur.
